# EUROPEAN PATENT APPLICATION

(11) **EP 4 831 726 A1**
(43) Date of publication of application: **28.10.2026**
(21) Application number: 24907201.8
(22) Date of filing: 06.12.2024
(51) Int. Cl.: G02C 13/00, G02C 7/06

(54) **EYEGLASS LENS EVALUATION METHOD, DESIGN METHOD, SELECTION METHOD, AND MANUFACTURING METHOD**

(30) Priority: 19.12.2023 JP 2023213609
(71) Applicant: Nikon-Essilor Co., Ltd., Tokyo 130-0026 (JP)
(72) Inventor: YOSHIDA Yoshinori, Tokyo 130-0026 (JP); MIYAZAKI Ken, Tokyo 130-0026 (JP); CHO Sungjin, Tokyo 130-0026 (JP); AIKAWA Naoshi, Tokyo 140-8601 (JP); NONAKA Azuna, Tokyo 140-8601 (JP); SHIRAYAMA Hiroki, Tokyo 140-8601 (JP)
(74) Representative: Viering, Jentschura & Partner mbB Patent- und Rechtsanwälte
(86) International application number: PCT/JP2024/043237
(87) International publication number: WO 2025/134815

(57) **Abstract**

A method for evaluating a spectacle lens is constituted comprising a calculation step of calculating a three-dimensional clear vision region AC in a visual field space visible through a spectacle lens (10) in a state in which a wearer wears the spectacle lens (10), and an evaluation step of evaluating the performance of the spectacle lens (10) based on the determined three-dimensional clear vision region. The three-dimensional clear vision region is calculated by determining, by MTF calculation, the range in which the contrast value is equal to or greater than a predetermined value.

## Description

### TECHNICAL FIELD

The present invention relates to a method for evaluating a spectacle lens, a method for designing and a method for selecting a spectacle lens based on the evaluation, and a method for manufacturing a spectacle lens based on the designing method and the selecting method.

### BACKGROUND ART

In manufacturing a spectacle lens, it is necessary to design and manufacture the spectacle lens suited to the eye of a wearer. For this reason, it is first necessary to evaluate and examine the wearer's refractive condition and vision. Patent Document 1 and Patent Document 2 are prior art documents related to such design, evaluation, and examination.

### PRIOR ART DOCUMENTS

### PATENT DOCUMENTS

Patent Document 1: JP 2001-318344 A
Patent Document 2: JP 2014-85575 A

### SUMMARY OF THE INVENTION

### PROBLEMS TO BE SOLVED BY THE INVENTION

Although a spectacle lens is designed and manufactured based on the results of an examination of a wearer's visual ability, there is a problem in that it is difficult to evaluate whether the spectacle lens designed and manufactured in this way is suitable for the wearer.

In view of such a problem, the present invention provides a new method for evaluating a spectacle lens, a method for designing and a method for selecting a spectacle lens suitable for a wearer based on the evaluation, and a method for manufacturing a spectacle lens based on the designing method and the selecting method.

### SOLUTION TO THE PROBLEMS

A method for evaluating a spectacle lens according to the present invention comprises a calculation step of calculating a three-dimensional clear vision region in a visual field space visible through the spectacle lens of the spectacles in a state in which a wearer wears the spectacles, and an evaluation step of evaluating the performance of the spectacle lens based on the calculated three-dimensional clear vision region.

A method for designing a spectacle lens according to the present invention comprises a corrective design step of performing a corrective design of the spectacle lens based on the evaluation in the evaluation step described above.

A method for selecting a spectacle lens design according to the present invention comprises a selection step of selecting an appropriate spectacle lens design from a plurality of spectacle lens designs prepared in advance based on the evaluation in the evaluation step described above.

A method for manufacturing a spectacle lens according to the present invention comprises a step of manufacturing the spectacle lens based on the design in the design step described above.

A method for manufacturing a spectacle lens according to the present invention comprises a step of manufacturing the spectacle lens based on the selection in the selection step described above.

### BRIEF DESCRIPTION OF DRAWINGS

FIG. 1 is a schematic diagram showing spectacles comprising a pair of spectacle lenses according to the present embodiment.
FIG. 2 shows examples of optical performance evaluation charts of a general progressive-power lens. FIG. 2(A) shows the astigmatism distribution of the lens and FIG. 2(B) shows the power distribution (addition power distribution) of the lens.
FIG. 3 is a schematic cross-sectional view showing a state in which the wearer wears spectacles, taken along a surface extending vertically through the lateral center of the spectacle lens for the right eye.
FIG. 4 is a graph showing, on the horizontal axis, the distance extending forward from the center O of the eye (center of the line of sight) along the line of sight G1 shown in FIG. 3, and showing, on the vertical axis, the contrast value C at each position on the line of sight G1.
FIG. 5 is a schematic cross-sectional view showing a state in which the wearer wears spectacles, taken along a surface extending vertically through the lateral center of the spectacle lens for the right eye, and representing the clear vision region visible through the spectacle lens for the right eye by means of three-dimensional polar coordinates (D, φ, θ).
FIG. 6 is a schematic cross-sectional view showing a state in which the wearer wears spectacles, taken along a surface extending vertically through the lateral center of the spectacle lens for the right eye, and representing the clear vision region visible through the spectacle lens for the right eye by means of three-dimensional polar coordinates (r, φ, θ).
FIG. 7 is a planar cross-sectional view showing a cross-section along arrow VII passing through the distance vision portion clear vision region AC(A) in FIG. 5, and showing the clear vision region within that cross-section.
FIG. 8 is a planar cross-sectional view showing a cross-section along arrow VIII passing through the near vision portion clear vision region AC(C) in FIG. 5, and showing the clear vision region within that cross-section.
FIG. 9 is a graph showing the difference in change of contrast value C in directions differing by 90 degrees due to astigmatism.
FIG. 10 is a schematic cross-sectional view showing a state in which the wearer wears spectacles, taken along a surface extending vertically through the lateral center of the spectacle lens for the right eye, and showing the clear vision region visible through the spectacle lens for the right eye.
FIG. 11 is a flowchart showing a series of steps for evaluating the three-dimensional clear vision region of a spectacle lens by the evaluation method according to the present embodiment, performing selection and/or corrective design of the design of the spectacle lens based on the evaluation, and manufacturing a spectacle lens based on the design.

### DESCRIPTION OF EMBODIMENTS

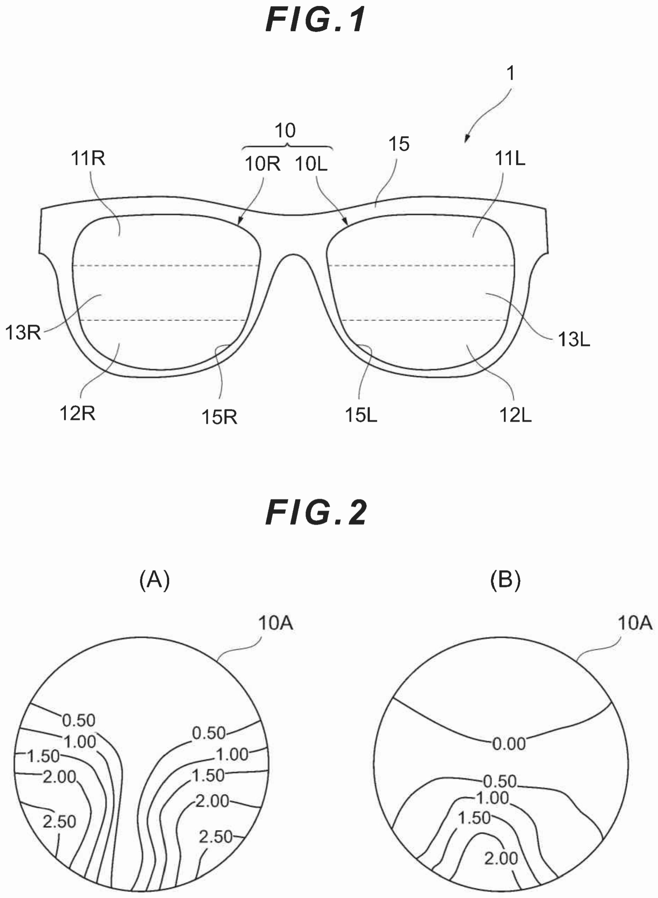

Preferred embodiments according to the present invention will be described below. As one example of the present embodiment, spectacles 1 to which the method for evaluating a spectacle lens according to the present invention is applied are schematically shown in FIG. 1. As shown in FIG. 1, the spectacles 1 comprise a spectacle lens for the right eye 10R used for the right eye EY(R), a spectacle lens for the left eye 10L used for the left eye EY(L), and a spectacle frame 15 having left and right mounting openings 15R, 15L to which both spectacle lenses 10R, 10L are attached. In the present embodiment, the spectacle lens for the right eye 10R and the spectacle lens for the left eye 10L may be collectively referred to simply as spectacle lens 10. The spectacle lens 10 in this embodiment is a lens called a so-called progressive-power lens. The positional relationship of "up, down, left, and right" of the spectacle lens 10 indicates the positional relationship when the spectacle lens 10 is attached to the spectacle frame 15 and used. That is, when the wearer wears the spectacles 1, the upward, downward, leftward, and rightward directions as seen by the wearer are referred to as the upward, downward, leftward, and rightward directions of the spectacles 1 and the spectacle lens 10. Furthermore, the direction in which the wearer looks through the spectacle lens 10 of the spectacles 1 is referred to as the forward direction.

As shown in FIG. 1, the spectacle lens for the right eye 10R comprises a distance vision portion for the right eye 11R located in the upper part, a near vision portion for the right eye 12R formed below the distance vision portion for the right eye 11R, and a progressive portion for the right eye 13R formed in an intermediate part connecting the distance vision portion for the right eye 11R and the near vision portion for the right eye 12R. The distance vision portion for the right eye 11R has a refractive power suitable for distance vision, and the near vision portion for the right eye 12R has a refractive power suitable for near vision. In the progressive portion for the right eye 13R, the refractive power changes continuously from the refractive power suitable for distance vision toward the refractive power suitable for near vision, as one goes from the side closer to the distance vision portion for the right eye 11R toward the side closer to the near vision portion for the right eye 12R.

As shown in FIG. 1, the spectacle lens for the left eye 10L comprises a distance vision portion for the left eye 11L located in the upper part, a near vision portion for the left eye 12L formed below the distance vision portion for the left eye 11L, and a progressive portion for the left eye 13L formed in an intermediate part connecting the distance vision portion for the left eye 11L and the near vision portion for the left eye 12L. The distance vision portion for the left eye 11L has a refractive power suitable for distance vision, and the near vision portion for the left eye 12L has a refractive power suitable for near vision. In the progressive portion for the left eye 13L, the refractive power changes continuously from the refractive power suitable for distance vision toward the refractive power suitable for near vision, as one goes from the side closer to the distance vision portion for the left eye 11L toward the side closer to the near vision portion for the left eye 12L.

In the present embodiment, "power" (unit: diopter [D]) is used as the numerical value representing refractive power. Furthermore, the change in power in the progressive portion and the near vision portion relative to the power in the distance vision portion (refractive power suitable for distance vision) is referred to as "addition power."

The spectacle lens 10 described above is manufactured by manufacturing a lens 10A with the design as shown in FIG. 2 and then processing it to conform to the shape of the mounting openings 15R, 15L of the spectacle frame 15. As described above, the spectacle lens 10 is a progressive-power lens, and the lens 10A has an astigmatism distribution as shown in FIG. 2(A) and a power distribution (addition power distribution) as shown in FIG. 2(B). Note that astigmatism is generally also referred to as astigmatic refractive power, and in this specification, astigmatism may also be referred to as astigmatic refractive power.

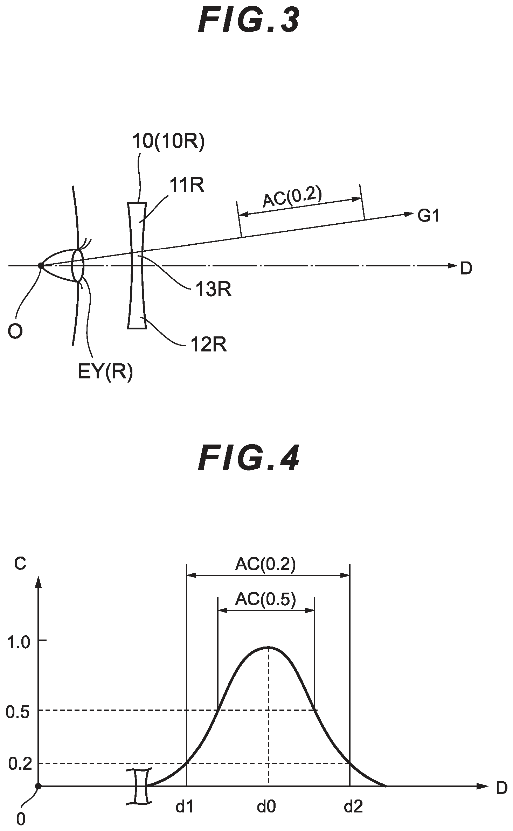

The method for evaluating a spectacle lens according to the present invention will be described below, taking the spectacle lens for the right eye 10R as an example. The evaluation method of the present invention calculates a three-dimensional clear vision region in the forward visual field space viewed through the spectacle lens 10, and evaluates lens performance and the like based on the three-dimensional clear vision region. First, the calculation of this three-dimensional clear vision region will be described. FIG. 3 shows a state in which the wearer wears the spectacles 1, taken along a surface extending vertically and also extending forward and backward through the lateral center of the spectacle lens for the right eye 10R. The spectacle lens 10 (spectacle lens for the right eye 10R) is positioned in front of the right eye EY(R) of the wearer, and the wearer views the forward visual field space through the spectacle lens 10 with the right eye EY(R).

In FIG. 3, the right eye EY(R) has a crystalline lens on the front side, and the right eye EY(R) rotates about the center of rotation of the eye O (center of the eyeball), changing the direction of the line of sight G, so that the wearer views forward objects through various points on the spectacle lens 10. As standard values, the distance from the center of rotation of the eye O to the cornea is approximately 13 mm, and the distance from the cornea at the front of the crystalline lens to the rear surface of the lens (the surface close to the eye) is approximately 12 mm. The crystalline lens has accommodation ability, and this ability allows a person to view objects from near to far distances with the naked eye; however, the spectacles 1 become necessary when this accommodation ability declines. In the method for evaluating a spectacle lens according to the present invention, even if the accommodation ability declines, each individual still has some accommodation ability, and it is necessary to take this into account in the evaluation. Note that, normally, the distance from the cornea is used as the reference point for the distance from the eye; however, since the present application uses a polar coordinate system centered on the center of rotation of the eye O, the center of rotation of the eye O is used as the reference point.

Taking one line of sight G1 indicated by an arrow in FIG. 3 as an example, the method for determining the three-dimensional clear vision region will be described. The change in contrast value along this line of sight G1 is shown in FIG. 4. In FIG. 4, the distance extending forward from the center of rotation O (center of the line of sight) along the line of sight G1 is shown on the horizontal axis in diopter D units (1/m), and the contrast value C (discrimination contrast value) visible to the right eye EY(R) at each position on the line of sight G1 is shown on the vertical axis. For example, the spectacle lens 10 is designed so that focus is achieved (focused) at the position of distance d0 when the right eye EY(R) views through the spectacle lens 10 along the line of sight G1, the contrast value C is the largest at this position, and objects at this position can be seen most clearly.

As the position viewed through the spectacle lens 10 by the right eye EY(R) moves forward and backward from the position of distance d0, the focus shifts (defocuses), causing blur (out-of-focus), and the degree of this blur increases as one moves away from the position of distance d0. The contrast value C decreases as shown in FIG. 4 in accordance with the magnitude of the blur that occurs in this way. For example, at the position of distance d0, focus is at its best, so the contrast value C is close to 1.0, and the object being viewed through the spectacle lens 10 by the right eye EY(R) can be seen clearly without any decrease in contrast. Note that in the present embodiment, distance is defined in diopters D (unit: 1/m), but it may instead be expressed as the actual length r (unit: m, etc.).

As the position of the object being viewed through the spectacle lens 10 by the right eye EY(R) moves forward and backward from the position of distance d0, the blur increases, so the contrast value C, which indicates the degree to which the object at that position can be distinguished, decreases. A higher contrast value C means the object can be seen more clearly, and the front-to-rear directional region on the line of sight G1 where the contrast value C becomes greater than a predetermined threshold is determined as the linear clear vision region. For example, as shown in FIG. 4, with a contrast value C = 0.2 as the threshold, the region AC(0.2) where the contrast value is equal to or greater than this value can be set as the linear clear vision region. The linear clear vision region is not limited to this region AC(0.2); for example, as shown in FIG. 4, with a contrast value C = 0.5 as the threshold, the region AC(0.5) where the contrast value is equal to or greater than this value may be set as the linear clear vision region. In this way, the linear clear vision region AC can be variously set using the contrast value as a threshold, but first, the case in which the region AC(0.2) where the contrast value is equal to or greater than the threshold of contrast value C = 0.2 is set as the linear clear vision region will be described as an example.

Note that FIG. 4 shows an example in which the crystalline lens has no accommodation function; however, if accommodation function is present, the width of distance d0 at which the contrast value C becomes large expands in the direction approaching the eye. Accordingly, the curve on the side closer to the eye than distance d0 in FIG. 4 becomes a curve that is shifted in parallel by the corresponding amount of such expansion.

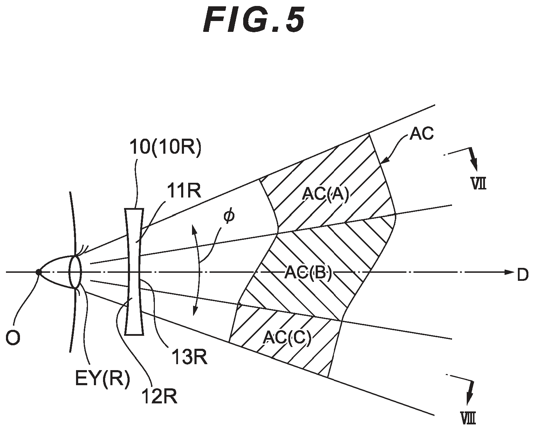

The linear clear vision region AC(0.2) on line of sight G1 set in this way is shown in FIG. 3. The line of sight G1 passes through one point on the spectacle lens 10, and by scanning this point on the spectacle lens 10 to move the line of sight G along the surface of the spectacle lens 10 and cumulatively displaying the linear clear vision region AC(0.2), the three-dimensional clear vision region AC as shown in FIGS. 5 to 8 can be obtained. As described above, the spectacle lens 10 (10R) comprises the distance vision portion 11R, the progressive portion 13R, and the near vision portion 12R, each having a different position of focus. Therefore, as shown in FIG. 5, the three-dimensional clear vision region AC is composed of the distance vision portion clear vision region AC(A) when viewed through the distance vision portion 11R, the progressive portion clear vision region AC(B) when viewed through the progressive portion 13R, and the near vision portion clear vision region AC(C) when viewed through the near vision portion 12R. The distance vision portion 11R has a low power (toward the minus side) and has the distance vision portion clear vision region AC(A) far away; the near vision portion 12R has a high power (addition power) (toward the plus side) and has the near vision portion clear vision region AC(C) close by; and in the progressive portion 13R, the power (addition power) increases from top to bottom, so the progressive portion clear vision region AC(B) gradually becomes closer from the distance vision portion clear vision region AC(A) toward the near vision portion clear vision region AC(C). As can be seen from this, the wearer of the spectacles 1 can clearly see far objects through the distance vision portion 11R, can clearly see near objects through the near vision portion 12R, and can clearly see the intermediate range through the progressive portion 13R.

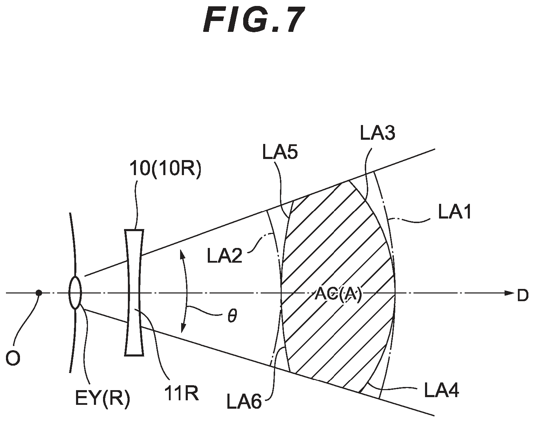

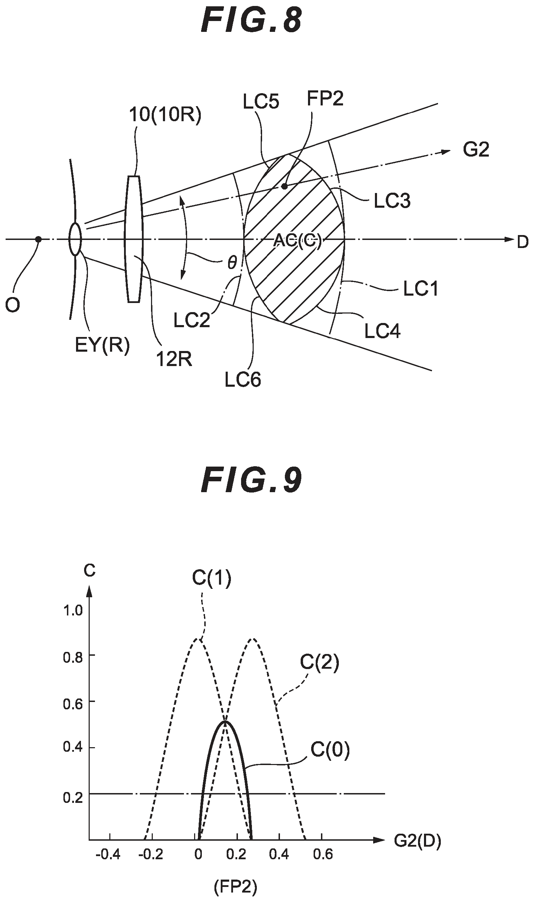

When representing the three-dimensional clear vision region AC as shown in FIGS. 5, 7, and 8, it can be expressed in three-dimensional polar coordinates (D, φ, θ) using the vertical angle φ, which is the vertical direction angle centered on the center of line of sight O shown in FIG. 5, the lateral angle θ, which is the lateral direction angle centered on the center of line of sight O shown in FIGS. 7 and 8, and the distance D (diopter) from the center of the line of sight. In this case, FIG. 5 shows the two-dimensional cross-sectional shape based on the vertical angle φ and the distance D. The distance D from the center of the line of sight is expressed in diopter units.

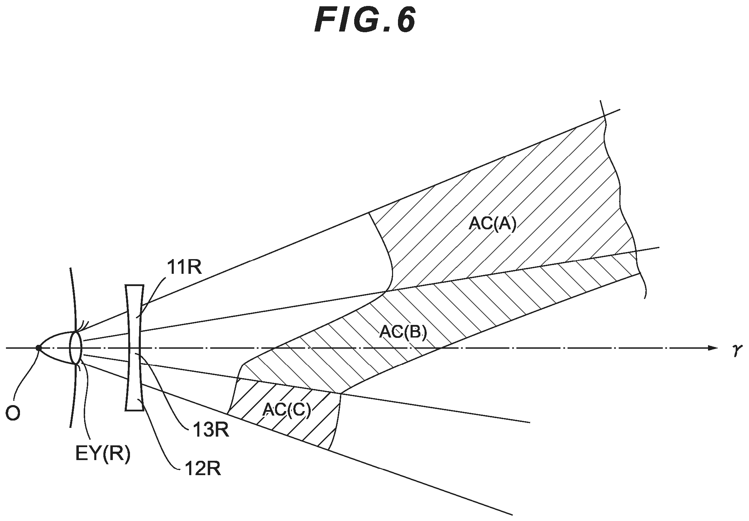

Instead of the distance D in diopter units, it may be expressed in three-dimensional polar coordinates (r, φ, θ) using the distance r (m). An example of expression in three-dimensional polar coordinates (r, φ, θ) instead of FIG. 5 is shown in FIG. 6. The three-dimensional clear vision region is the same in FIG. 5 and FIG. 6, but the appearance differs greatly depending on whether it is in diopters (D) or in actual distance r (m), as shown. The (D, φ, θ) coordinate system and the (r, φ, θ) coordinate system both indicate the same content. The (D, φ, θ) coordinate system can be used during design evaluation, while the (r, φ, θ) coordinate system can be used when evaluating the usability of the lens in real space, and they can be used as appropriate. Note that in the following, figures expressed in three-dimensional polar coordinates (D, φ, θ) using diopters (D) for the length in the direction of the line of sight will be used for explanation.

The distance vision portion clear vision region AC(A), the progressive portion clear vision region AC(B), and the near vision portion clear vision region AC(C) shown in FIG. 5 are three-dimensional regions that also spread in the lateral direction of the spectacle lens 10. To show this three-dimensional shape, a planar cross-section along arrow VII passing through the distance vision portion clear vision region AC(A) shown in FIG. 5 is shown in FIG. 7, and a planar cross-section along arrow VIII passing through the near vision portion clear vision region AC(C) is shown in FIG. 8. FIGS. 7 and 8 show two-dimensional cross-sectional shapes based on the lateral angle θ and the distance D, and together with the two-dimensional cross-sectional shape based on the vertical angle φ and the distance D in FIG. 5, the three-dimensional shape of the clear vision region can be determined.

First, the distance vision portion clear vision region AC(A) shown in FIG. 7 will be described. The distance vision portion clear vision region AC(A) is formed by the upper part of the spectacle lens 10; as shown in FIG. 2(B), it is a lens configuration with a low power (toward the minus side) with focus far away; and as shown in FIG. 2(A), the astigmatism (astigmatic refractive power) occurs to only a small degree on both the left and right sides of the distance vision portion clear vision region AC(A) and is relatively small. When there is no astigmatism, the arc-shaped range surrounded by the dashed-dotted lines LA1 and LA2 in FIG. 7 becomes the clear vision region; however, affected by the astigmatism on both the left and right sides of the distance vision portion clear vision region AC(A), the clear vision region becomes slightly narrower as shown by the solid lines LA3 to LA6.

Next, the near vision portion clear vision region AC(C) shown in FIG. 8 will be described. The near vision portion clear vision region AC(C) is formed by the lower part of the spectacle lens 10; as shown in FIG. 2(B), it is a lens configuration with a high power (addition power) (toward the plus side) with focus close by; and as shown in FIG. 2(A), the astigmatism (astigmatic refractive power) increases on both the left and right sides of the near vision portion clear vision region AC(C). When there is no astigmatism, the arc-shaped range surrounded by the dashed-dotted lines LC1 and LC2 in FIG. 8 becomes the clear vision region; however, in the near vision portion clear vision region AC(C), the astigmatism rapidly increases as one moves to both the left and right sides. Affected by this rapidly increasing astigmatism, the clear vision region rapidly narrows as one moves to both the left and right sides, as shown by the solid lines LC3 to LC6. Therefore, it can often happen that, as one moves toward both the left and right outer edges of the near vision portion clear vision region AC(C), the clear vision region disappears.

Incidentally, the decrease in contrast value C due to astigmatism differs depending on the direction within the plane perpendicular to the optical axis (the surface of the spectacle lens 10). For example, the change in contrast value C differs between the lateral direction and the vertical direction of the spectacle lens 10 (i.e., directions differing by 90 degrees). This will be described with reference to FIG. 9 regarding the contrast value C on the line of sight G2 indicated by the arrow in FIG. 8. FIG. 9 is a graph showing the position on the line of sight G2 on the horizontal axis and the contrast value C on the vertical axis, and is the result of so-called MTF (Modulation Transfer Function) calculation. The position FP2 on the line of sight G2 where focus is achieved is shown on the horizontal axis at the origin position 0 in FIG. 9. In FIG. 9, positions on the forward side from this origin position 0 (FP2) are shown as positive values on the horizontal axis, and positions on the near side are shown as negative values.

On the line of sight G2, because the astigmatism of the spectacle lens 10 is large, for example, the contrast value C of the focal line in the lateral direction, as shown by dashed line C(1), is largest at the origin position 0 and decreases as it moves forward and backward from the origin position 0. On the other hand, the contrast value C of the focal line in the vertical direction, as shown by dashed line C(2), is largest at a position of approximately 0.25 D and decreases as it moves forward and backward from the position of approximately 0.25 D. In this way, it is necessary to determine the clear vision region based on the contrast value C, which differs between the lateral direction and the vertical direction of the spectacle lens 10 (i.e., the vertical direction and horizontal direction differing by 90 degrees). Therefore, at each position on the line of sight G2, the geometric mean contrast value C(B) of the contrast value C(1A) on dashed line C(1) and the contrast value C(2A) on dashed line C(2) is determined, and the clear vision region is determined by the geometric mean contrast value C(B). Note that the geometric mean contrast value C(B) is the square root of the product of contrast value C(1A) and contrast value C(2A). The geometric mean contrast value C(B) determined in this way becomes the value shown by solid line C(0) on the line of sight G2, and the range on this solid line C(0) where the contrast value C becomes equal to or greater than 0.2 is taken as the clear vision region. Note that the calculation of the geometric mean contrast value C(B) based on the above formula is one example, and other calculation methods may be used, such as one based on the position of approximately -0.2 D on the minus side end of contrast value C(1A) to the position of approximately 0.5 D on the plus side end of contrast value C(2A).

As the contrast value C for defining the clear vision region, various standards can be used as threshold values, such as a standard contrast value at which there is no problem with the readability of the object, a high contrast value at which no decrease in contrast is felt, a low contrast value at which characters can barely be read, and so on. This makes it possible to perform various evaluations in the evaluations described later.

The setting of the clear vision region using the contrast value C described above is based on the contrast value at each position of the lens, and is to set the three-dimensional clear vision region using the so-called MTF (Modulation Transfer Function). In this case, in the cross-sectional view shown in FIG. 5, since the power changes according to the vertical direction angle (angle φ) position, the clear vision region moves closer from AC(A) to AC(C). The clear vision regions shown in FIGS. 7 and 8 (the distance vision portion clear vision region AC(A) and the near vision portion clear vision region AC(C)) correspond to the height (angle φ) at the lateral direction angle (angle θ), and the three-dimensional clear vision region according to MTF is defined.

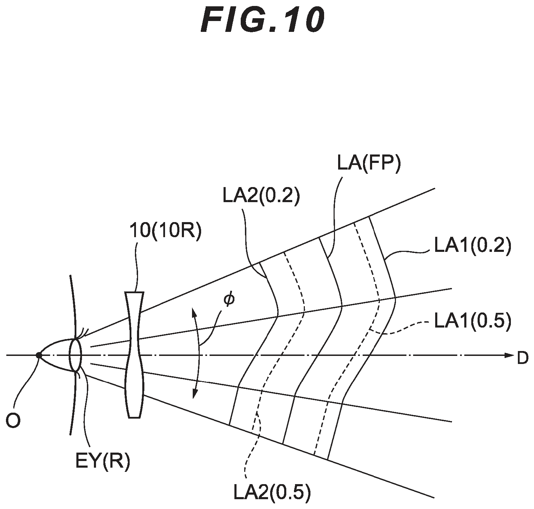

The example of setting the range where the contrast value C becomes equal to or greater than 0.2 as the clear vision region AC(0.2) has been described above, but as mentioned above, the clear vision region can also be set based on different contrast values C. For example, as shown in FIG. 4, with a contrast value C = 0.5 as the threshold, the region AC(0.5) where the contrast value is equal to or greater than this value may be set as the clear vision region. As shown in FIG. 10, the range of the clear vision region set in this way is: the range sandwiched between the two front-and-rear iso-contrast surfaces LA1(0.2) and LA2(0.2) where contrast value C = 0.2 becomes the clear vision region AC(0.2), and the range sandwiched between the two front-and-rear iso-contrast surfaces LA1(0.5) and LA2(0.5) where contrast value C = 0.5 becomes the clear vision region AC(0.5). Naturally, the clear vision region AC(0.2) is a wider region than the clear vision region AC(0.5). Also, the iso-contrast surface LA(FP) where focus is at its best and the contrast value C is at its maximum is located at an intermediate position.

The three-dimensional clear vision region is set as described above, and the lens performance is evaluated based on the three-dimensional clear vision region set in this way. The three-dimensional clear vision region can be calculated by integrating the coordinate values (D, φ, θ) within the clear vision region AC(0.2) over the entire region. For example, for the clear vision region AC(0.2) on the line of sight G1 shown in FIG. 3, the line of sight G1 can be moved within the visible range of the spectacle lens 10 in the vertical direction angle φ and within the visible range of the spectacle lens 10 in the lateral direction angle θ, and moved within the visible range in the front-to-rear direction (D), and the clear vision region AC(0.2) at that time can be integrated to obtain the result. The performance of the spectacle lens 10 can be evaluated by means of the three-dimensional clear vision region thus determined. It is preferable to perform this evaluation in combination with the position in the direction of the line of sight G. For example, it is preferable to evaluate the determined three-dimensional clear vision region in relation to the positions of the iso-contrast surfaces LA1(0.2), LA2(0.2) defining the clear vision region AC(0.2) in the line of sight direction, and the iso-contrast surface LA(FP) where focus is at its best and the contrast value C is at its maximum, and to evaluate the performance of the spectacle lens.

Regarding this three-dimensional clear vision region evaluation, the performance of the spectacle lens 10 and the like can be evaluated based on the entire visible range of the spectacle lens 10. In this case, the entire region can be evaluated in combination with the positional relationship in the direction of the line of sight G, or in combination with the position with the iso-contrast surface. Each region of the distance vision portion 11R, the progressive portion 13R, and the near vision portion 12R in the spectacle lens 10 can also be evaluated in combination with the positional relationship in the direction of the line of sight G, or in combination with the position with the iso-contrast surface. By doing so, the lens performance can be evaluated separately for each of the distance vision portion 11R, the progressive portion 13R, and the near vision portion 12R. In addition, the region can be determined by limiting it to a desired range in the spectacle lens 10, and the lens performance within the limited range can be evaluated based on this. For example, the region can be determined limited to a range with small astigmatism in the center of the near vision portion 12R, and the evaluation of lens performance during reading based on this can be performed.

The evaluation of a lens is performed based on the ease of use (whether one can see what one wants to see) when the wearer uses the lens, for example, during activities such as driving a car, watching television, operating a computer, operating a mobile device, reading, or performing fine close-up work. Specifically, the higher the evaluation if everything one wants to see can be seen, and important indicators include how large a region (how wide) the clear vision region is and how much of what one wants to see it can cover. Furthermore, with a progressive-power lens, there are objects to be viewed at far, intermediate, and near distances, so the evaluation becomes a combination of these. For example, it is also conceivable to set a level of emphasis by usage, such as driving: 5, computer: 3, reading: 2, and evaluate accordingly. Information regarding these intended uses is obtained through interviews and questionnaires at optical shops. This information is then sent to the manufacturer, who evaluates the design.

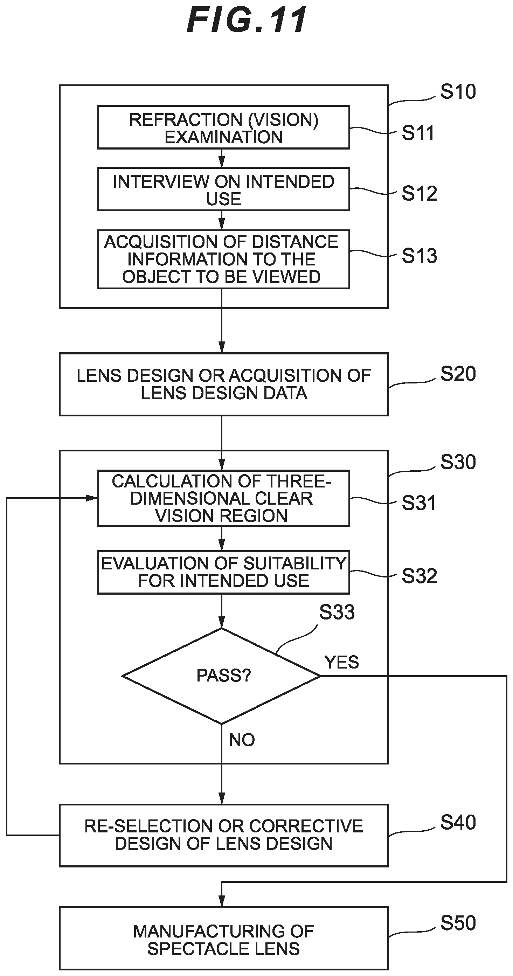

By evaluating the performance of the spectacle lens and the like using the evaluation method described above, it is possible to perform corrective design of the spectacle lens design based on this evaluation, or to perform selection of an appropriate spectacle lens design from a plurality of spectacle lens designs prepared in advance. Furthermore, by manufacturing a spectacle lens based on the corrective design or the selection of an appropriate spectacle lens design performed in this way, it is possible to obtain a spectacle lens suited to the wearer and their intended use. This series of steps will be described with reference to FIG. 11.

This series of steps, as shown in FIG. 11, comprises: an information acquisition step S10 for performing vision tests such as refractive examination of the wearer of the spectacles and acquiring various information to obtain information about the spectacle lens suitable for the wearer; a base design step 20 for performing the design of the base spectacle lens or acquiring lens design data based on the information acquired in this way; an evaluation step S30 for evaluating the spectacle lens (evaluating whether the spectacle lens meets the intended use of the wearer) based on the design of the base spectacle lens; a spectacle lens redesign step S40 for performing selection or corrective design of the spectacle lens design when this evaluation fails; and a spectacle lens manufacturing step S50 for manufacturing the spectacle lens based on the design when the evaluation in the evaluation step S30 passes.

The base spectacle lens design step S10 is an operational step currently generally performed at optical shops and the like. First, in the refraction (vision) examination step S11, a refraction examination and vision test such as those performed at a general optical shop are carried out on the person to be fitted (the wearer), and furthermore, in the interview step S12, in order to design a lens suited to the wearer's eyes, an interview is conducted to find out what kind of intended use the wearer is seeking spectacles for, the frequency of use, the degree of importance, and so on. Then, distance information to the object to be viewed corresponding to the intended use (for example, a computer screen) is acquired (distance information acquisition step S13). The data for the lens design thus determined is sent to the spectacle lens manufacturer, and the spectacle lens manufacturer performs the design of the base spectacle lens or acquires lens design data based on the received data (base design step S20).

Note that in the base design step S20, instead of designing the base spectacle lens, it is also possible to prepare various types of base spectacle lens designs in advance and select from among them the base spectacle lens design suited to the wearer's purpose and intended use, based on the results of the refractive examination and vision test, the intended use of the spectacles, the distance information to the object to be viewed, and the like acquired in step S10.

Next, in the evaluation step S30, an evaluation is performed as to whether the base spectacle lens design thus designed or selected is suitable for the wearer. This evaluation step S30 has: a three-dimensional clear vision region calculation step S31 for performing calculation of the three-dimensional clear vision region and calculating the three-dimensional clear vision region based on the base spectacle lens design; an evaluation step S32 for evaluating whether the three-dimensional clear vision region calculated in this way meets the intended use and the like; and a judgment step S33 for determining the next step to proceed to based on the evaluation in evaluation step S32.

In step S31 for calculating the three-dimensional clear vision region, as described above with reference to FIGS. 3 and 4, the wearer wears the spectacle lens 10, and the region AC(0.2) where the contrast value C is equal to or greater than 0.2, for example, is calculated on the line of sight G through which the wearer views through the spectacle lens. Then, the line of sight G is moved within the visible range of the spectacle lens and the region AC(0.2) is integrated to calculate the three-dimensional clear vision region as shown in FIGS. 5 to 8. Next, in step S32, the performance of the base spectacle lens and the like are evaluated based on the calculated three-dimensional clear vision region. As described above, this evaluation is performed in relation to the position on the line of sight G or the position of the iso-contrast surface, or based on a region limited to a desired range of the spectacle lens 10. As desired ranges here, there are, for example, driving a car, watching television, operating a computer, operating a mobile device, reading, fine close-up work, and combinations of these. It is also conceivable to set a level of emphasis by usage, such as car: 5, computer: 3, reading: 2, using a questionnaire or the like.

When the evaluation in step S32 passes, the process proceeds from judgment step S33 to the spectacle lens manufacturing step S50, and the spectacle lens is manufactured based on the design of the spectacle lens performed in the base design step S20 or the acquired lens design data. On the other hand, when the evaluation in step S32 fails, the process proceeds from judgment step S33 to the spectacle lens redesign step S40, and selection or corrective design of the spectacle lens design is performed. Once the re-selection or corrective design of the design is performed in this way, the process returns to the three-dimensional clear vision region calculation step S31 and the three-dimensional clear vision region based on the re-selection or corrective design is calculated. Thereafter, the above steps from step S32 are repeated.

By following the above steps, the spectacle lens is manufactured based on the spectacle lens design data whose evaluation has passed in step S32, so that the optimal spectacle lens adapted to the wearer's vision and intended use can be produced.

### LIST OF REFERENCE SIGNS

- 1: A pair of spectacle lenses
- 10: Spectacle lens
- 10R: Spectacle lens for right eye
- 10L: Spectacle lens for left eye
- 11R, 11L: Near vision portion for right eye, left eye
- 12R, 12L: Distance vision portion for right eye, left eye
- 13R, 13L: Progressive portion for right eye, left eye
- C: Contrast value
- G: Line of sight

## Claims

1. A method for evaluating a spectacle lens, comprising:
a calculation step of calculating a three-dimensional clear vision region in a visual field space visible through the spectacle lens of spectacles in a state in which a wearer wears the spectacles; and
an evaluation step of evaluating the performance of the spectacle lens based on the calculated three-dimensional clear vision region.

2. The method for evaluating the spectacle lens according to claim 1, wherein, in the calculation step, a linear clear vision region on a straight line extending from the eye of the wearer through a predetermined position within a visible range of the spectacle lens is calculated, and the three-dimensional clear vision region is calculated by moving the predetermined position in the visible range of the spectacle lens and integrating the linear clear vision region.

3. The method for evaluating the spectacle lens according to claim 1, wherein, in the calculation step, the visual field space visible through the spectacle lens is defined by a vertical angle (φ) and a lateral angle (θ) covering a visible range of the spectacle lens as seen from the eye of the wearer, and a distance index (D) indicating a position on a straight line extending from the eye of the wearer through a predetermined position within the visible range of the spectacle lens, and the three-dimensional clear vision region is expressed in three-dimensional polar coordinates (D, φ, θ), and the three-dimensional clear vision region is calculated by integrating positions within the clear vision region expressed in the three-dimensional polar coordinates (D, φ, θ) over the clear vision region.

4. The method for evaluating the spectacle lens according to claim 1, wherein, in the calculation step, the visual field space visible through the spectacle lens is defined by a vertical angle (φ) and a lateral angle (θ) covering a visible range of the spectacle lens as seen from the eye of the wearer, and a distance (r) to a position on a straight line extending from the eye of the wearer through a predetermined position within the visible range of the spectacle lens, and the three-dimensional clear vision region is expressed in three-dimensional polar coordinates (r, φ, θ), and the three-dimensional clear vision region is calculated by integrating positions within the clear vision region expressed in the three-dimensional polar coordinates (r, φ, θ) over the clear vision region.

5. The method for evaluating the spectacle lens according to claim 1, wherein the three-dimensional clear vision region corresponds to a range in which a contrast value of an object viewed through the spectacle lens by a wearer in a state in which the wearer wears the spectacles is equal to or greater than a predetermined value.

6. The method for evaluating the spectacle lens according to claim 5, wherein the range in which the contrast value is equal to or greater than the predetermined value is determined by MTF calculation.

7. The method for evaluating the spectacle lens according to claim 5, wherein, as the contrast value for defining the three-dimensional clear vision region, a plurality of contrast values are used, such as a contrast value at which there is no problem with the readability of an object, and a contrast value at which no decrease in contrast is felt, and the three-dimensional clear vision region is selectively set based on judgment levels of the plurality of contrast values.

8. The method for evaluating the spectacle lens according to claim 1, wherein, within a visible range of the spectacle lens, an iso-contrast surface on which a contrast value is equal is determined, and the three-dimensional clear vision region is defined using the iso-contrast surface.

9. The method for evaluating the spectacle lens according to claim 1, wherein, in the evaluation step, the performance of the spectacle lens is evaluated by evaluating the three-dimensional clear vision region in combination with a distance on a straight line extending from the eye of the wearer through the spectacle lens.

10. The method for evaluating the spectacle lens according to claim 8, wherein, in the evaluation step, the performance of the spectacle lens is evaluated by evaluating the three-dimensional clear vision region in combination with the position of the iso-contrast surface.

11. The method for evaluating the spectacle lens according to claim 1, wherein, in the evaluation step, a predetermined range is selected and set from within a visible range of the spectacle lens, the three-dimensional clear vision region within the set range is determined, and the performance of the spectacle lens is evaluated based on the determined three-dimensional clear vision region within the predetermined region.

12. The method for evaluating the spectacle lens according to claim 11, wherein the spectacle lens is a progressive-power lens, and at least one of a distance vision portion, a progressive portion, and a near vision portion of the bifocal lens is the predetermined range.

13. The method for evaluating the spectacle lens according to claim 11, wherein the predetermined range is selected and set based on MTF calculation of the progressive-power lens.

14. The method for evaluating the spectacle lens according to claim 1, wherein, in the evaluation step, the performance of the spectacle lens is evaluated based on the degree to which the three-dimensional clear vision region covers an object to be viewed present in the visual field space visible through the spectacle lens of the spectacles in a state in which the wearer wears the spectacles.

15. A method for designing a spectacle lens, comprising a design step of performing a corrective design of the spectacle lens based on the evaluation in the evaluation step according to any one of claims 1 to 14.

16. A method for selecting a spectacle lens, comprising a selection step of selecting an appropriate spectacle lens design from a plurality of spectacle lens designs prepared in advance based on the evaluation in the evaluation step according to any one of claims 1 to 14.

17. A method for manufacturing a spectacle lens, comprising a step of manufacturing the spectacle lens based on the design in the design step according to claim 15.

18. A method for manufacturing a spectacle lens, comprising a step of manufacturing the spectacle lens based on the selection in the selection step according to claim 16.
